## Europäisches Patentamt

## European Patent Office

## Office européen des brevets

(19)

(11) Veröffentlichungsnummer: **0 118 122**
**B1**

(12)

# EUROPÄISCHE PATENTSCHRIFT

(45) Veröffentlichungstag der Patentschrift:
20.07.88

(21) Anmeldenummer: 84102248.6

(22) Anmeldetag: 02.03.84

(51) Int. Cl.⁴: **G 01 P 3/66, F 42 C 17/00**

(54) **Verfahren und Vorrichtung zur Einstellung der Laufzeit eines Geschoss-Zeitzünders.**

(30) Priorität: 04.03.83 DE 3307785

(43) Veröffentlichungstag der Anmeldung:
12.09.84 Patentblatt 84/37

(45) Bekanntmachung des Hinweises auf die Patenterteilung:
20.07.88 Patentblatt 88/29

(84) Benannte Vertragsstaaten:
CH DE FR GB IT LI NL SE

(56) Entgegenhaltungen:
EP-A-0 023 365
DE-A-2 023 938
DE-A-2 800 236
FR-A-2 304 053
GB-A-2 042 695
US-A-3 228 337

(73) Patentinhaber: **Deutsch- Französisches Forschungsinstitut Saint- Louis, 12, rue de l'Industrie, F-68301 Saint- Louis Cédex (FR)**

(72) Erfinder: **Wegner, Volker, Dr. rer. nat., Schwarzwaldstrasse 12, D-7851 Binzen (DE)**
Erfinder: **Schultze, Günter, Ing. grad., Beethoven Strasse 14, D-7858 Weil am Rhein (DE)**

(74) Vertreter: **Schwabe, Hans- Georg, Dipl.- Ing., Patentanwälte Schwabe, Sandmair, Marx Stuntzstrasse 16, D-8000 München 80 (DE)**

## Beschreibung

Die Erfindung betrifft ein Verfahren zur Einstellung der Laufzeit eines Geschoß-Zeitzünders, wonach die Mündungsgeschwindigkeit des Geschosses gemessen und die Laufzeit durch den Meßwert der Mündungsgeschwindigkeit korrigiert wird, sowie eine Vorrichtung zur Durchführung dieses Verfahrens.

Ein derartiges Verfahren ist aus der FR-A-2 304 053 bekannt. Die Vorrichtung zur Durchführung dieses bekannten Verfahrens umfaßt zwei hintereinander in Flugrichtung des Geschosses angeordnete Meßspulen, die im Bereich einer Kanonenmündung angeordnet sind. Es ist ferner eine Sende/Empfängereinrichtung vorgesehen, wobei die Sendeeinrichtung im Bereich der Kanone angeordnet ist, während die Empfängereinrichtung an dem Geschoß vorgesehen ist. Die Empfängereinrichtung besteht aus einer Empfangsspule, die innerhalb des Materials des Geschosses eingebettet ist. Die Mündungsgeschwindigkeit des Geschosses wird mit Hilfe der im Abstand zueinander angeordneten zwei Meßspulen ermittelt, deren Induktivitätswert bei dem Vorbeiflug des Geschosses verändert wird, so daß aus der Zeitdifferenz der Beeinflussung der beiden im Abstand angeordneten Meßspulen die Mündungsgeschwindigkeit berechnet werden kann. Zu diesem Zweck ist auch ein Rechner vorgesehen, der anhand der Meßwerte die Mündungsgeschwindigkeit berechnet und den berechneten Wert an die Sendevorrichtung weitergibt. Mit Hilfe dieser Sendevorrichtung wird der errechnete Wert an das Geschoß drahtlos übermittelt und zur Korrektur der Laufzeit verwendet.

Dieses bekannte System bietet jedoch keine besonders hohe Sicherheit, da bei der Meßwertübertragung zwischen Sendevorrichtung und Empfangsspule Fehler beispielsweise durch Störsignale auftreten können.

Aus der EP-A-0 023 365 ist ein Verfahren und eine Vorrichtung zur Messung der Geschwindigkeit eines Geschosses auf der Grundlage des Dopplerprinzips unter Verwendung von Sende/ Empfangsgeräten bekannt. Bei dieser bekannten Vorrichtung ist am Ende eines Waffenrohres eine Detektoreinrichtung vorgesehen, um die Mündungsgeschwindigkeit eines Geschosses zu messen. Nach dem Bestimmen von Geschwindigkeit bzw. Flugzeit des Geschosses kann die Information an das elektronisch zündbare Geschoss drahtlos übertragen werden.

Aus der DE-A-2 023 938 ist ebenfalls ein Verfahren zur Messung von Geschoßgeschwindigkeiten bekannt. Ein HF-Oszillator wird an der Mündung oder am Lauf der betreffenden Waffe befestigt. Die durch das an einem oder zwei Blindwiderständen vorbeilaufende Geschoß hervorgerufene Frequenzänderung wird durch einen schmalbandigen Meßempfänger ausgewertet.

Der Erfindung liegt die Aufgabe zugrunde, ein Verfahren und eine Vorrichtung zur Einstellung der Laufzeit eines Geschoß-Zeitzünders der angegebenen Gattung zu schaffen, welches bzw. welche die Möglichkeit bietet, bei besonders einfacher und robuster Konstruktion die Sicherheit bei der Einstellung der Laufzeit wesentlich zu verbessern.

Gemäß einem ersten Lösungsvorschlag wird diese Aufgabe erfindungsgemäß dadurch gelöst, daß die Mündungsgeschwindigkeit des Geschosses mittels einer innerhalb des Geschosses angeordneten Meßeinrichtung mit Hilfe zweier ringförmiger Nuten als Meßbasis ermittelt wird, die im Waffenrohrbereich ausgebildet sind.

Die genannte Aufgabe wird erfindungsgemäß nach einem zweiten Lösungsvorschlag dadurch gelöst, daß die Mündungsgeschwindigkeit des Geschosses mittels einer innerhalb des Geschosses angeordneten Meßeinrichtung mit Hilfe einer im Waffenrohrbereich ausgebildeten Nut und dem Waffenrohrende als Meßbasis ermittelt wird.

Bei dem erfindungsgemäßen Verfahren wird die Mündungsgeschwindigkeit innerhalb des Geschosses selbst gemessen, so daß eine anschließende Korrekturwertübertragung nicht mehr erforderlich ist.

Aufgrund des Verfahrens nach der vorliegenden Erfindung kann die Waffe bzw. das Waffenrohr selbst auch äußerst robust ausgeführt werden und es besteht so gut wie garkeine Gefahr einer Störung im Bereich der Waffe oder des Waffenrohrs selbst, da dieses effektiv keinerlei elektrischer oder elektronischer Einrichtungen mehr aufzuweisen braucht. Die gesamte Elektronik konzentriert sich somit auf das Geschoß selbst, so daß Störeinflüsse weitgehend ausgeschaltet werden können.

Die Vorrichtung zur Durchführung des erfindungsgemäßen Verfahrens umfaßt einen im Geschoss angeordneten Oszillator mit einer Spule, die sich an der Grenzfläche zwischen Waffenrohr und Geschoßhülle befindet, so daß seine Schwingfrequenz durch die Meßbasis in Form einer im Waffenrohrbereich ausgebildeten ringförmigen Nut bzw. ringförmiger Nuten verstimmbar ist.

Die Vorrichtung zur Durchführung des erfindungsgemäßen Verfahrens kann schließlich dadurch noch eine vorteilhafte Ausgestaltung erfahren, daß dem Oszillator ein Vorwärts-/Rückwärtszähler und ein einstellbarer Frequenzteiler zugeordnet ist. Durch den Vorwärts-/Rückwärtszähler können systematische Fehler vermieden werden und ein der Mündungsgeschwindigkeit proportionaler Wert sicher und auf einfache Weise verwertbar festgehalten werden. Mit Hilfe des einstellbaren Frequenzteilers kann der zur jeweiligen Entfernung gehörige Wert auf einfache Weise berücksichtigt und eingestellt werden.

Im folgenden wird die Erfindung anhand von Ausführungsbeispielen unter Hinweis auf die Zeichnung näher erläutert. Es zeigen:

Fig. 1 die Anordnung der einzelnen Komponenten bei Anwendung der Erfindung bei einem Vollkalibergeschoß;

Fig. 2 die Anordnung der Komponenten bei Anwendung der Erfindung bei unterkalibrigem Treibkäfiggeschoß;

Fig. 3 den Zusammenhang zwischen der Form der Meßbasis und der Oszillatorfrequenz der Meßsonde; und

Fig. 4 ein Blockschaltbild eines elektronischen Zünders mit Laufzeitkorrektur durch eine Messung der Mündungsgeschwindigkeit,

Fig. 5 die Einstellung bzw. Programmierung des Zünders im Waffenrohr;

Fig. 6 die Einstellung bzw. Programmierung des Zünders und seine Verstellung bzw. Laufzeitkorrektur auf der Flugbahn des Geschosses.

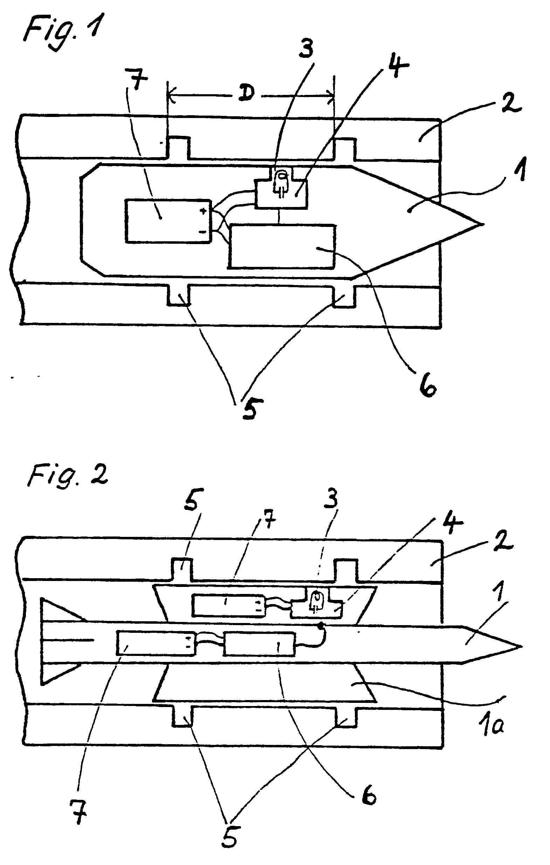

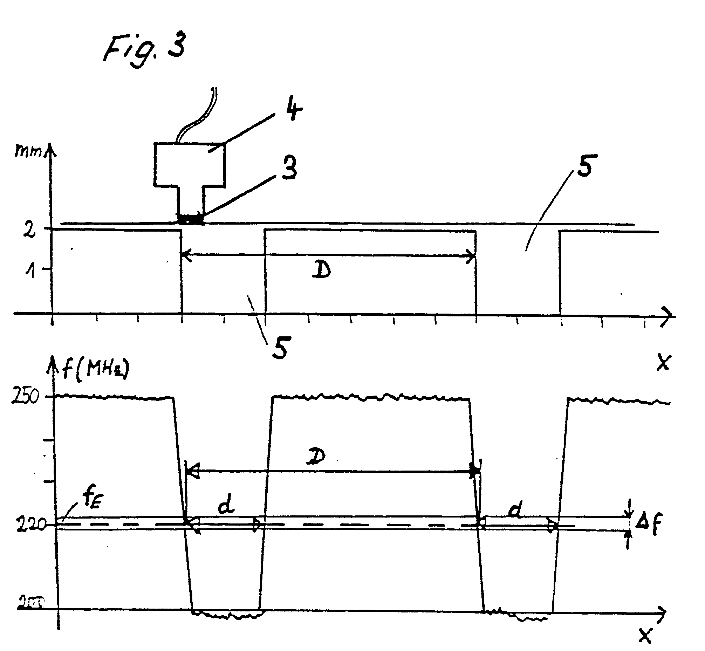

Die Meßbasis (5 in Fig. 1 und 2, D in Fig. 3) befindet sich, wie gezeigt, im Waffenrohr 2. Die Meßbasis besteht aus zwei ringförmigen Nuten 5. Es reicht jedoch auch eine Nut im Rohr aus, wenn das Waffenrohrende als Meßbasis benutzt wird.

Die Meßeinrichtung befindet sich im Geschoß. Eine Spule 3 eines Hochfrequenzoszillators 4 befindet sich direkt an der Grenzfläche zwischen Waffenrohr und Geschoßhülle. Der Oszillator 4 wird dazu zusammen mit der Spule 3 in ein Adaptergehäuse eingebaut, welches in eine Bohrung in der Geschoßhülle eingeschraubt wird. Der Oszillator 4 schwingt bei unterschiedlichen Frequenzen (vgl. Fig. 3), je nachdem, ob sich über der Oberfläche der Spule 3 Metall oder kein Metall befindet. Die absolute Größe der Frequenz des Oszillators ist frei wählbar. Befindet sich eine metallische Fläche über der Spule, so schwingt der Oszillator auf einer höheren Frequenz als mit Luft oder Kunststoff über der Spule.

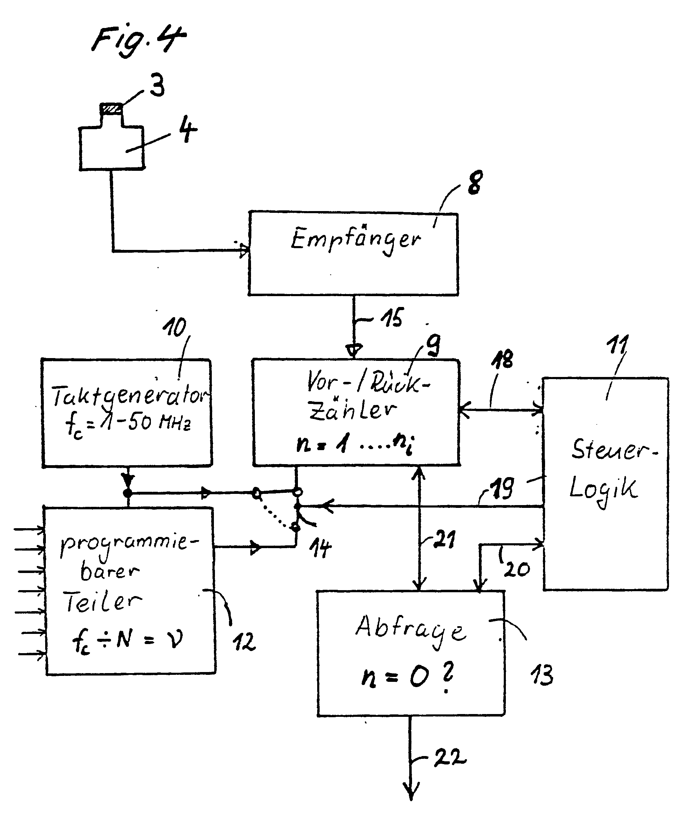

Beim Schuß bewegt sich die Meßeinrichtung mit dem Geschoß an der Meßbasis D am Waffenrohr vorbei. Beim Vorbeistreichen an den Kanten der Nuten ändert sich die Frequenz im Oszillatorkreis. Diese Frequenzänderung beträgt 40 bis 50 MHz bei den erprobten Versuchsmustern. Wie aus Fig. 4 ersichtlich, wird das Hochfrequenzsignal einem schmalbandigen ($\Delta f = 1$ MHz) Empfänger 8 zugeführt, dessen Empfangsfrequenz $f_E$ (Fig. 3) auf einen Wert zwischen den beiden Extremwerten eingestellt wird. Durch die schmale Bandbreite wird die Geschoßposition mit großer Genauigkeit bestimmt.

Die Frequenzänderung von 40 MHz erstreckt sich bei den erprobten Ausführungsformen über eine Strecke von 4 mm. Das ergibt bei einer Empfangsbandbreite von $\Delta f = 1$ MHz eine örtliche Auflösung von $\Delta D = 4$ mm/40 = 0,1 mm. Bei einer Meßbasislänge von D > 10 cm ergibt das eine Auflösung $\Delta D/D < 1$ ‰. Am Ausgang des Empfängers befindet sich eine Gleichrichterstufe, welche Impulse liefert, die jeweils erscheinen, wenn die Spule die Kante einer Nut passiert.

Aus der Zeit zwischen diesen Impulsen kann die Geschoßgeschwindigkeit ermittelt werden.

Wie in Fig. 4 dargestellt, werden die Impulse im Zeitzünder in folgender Weise zur Laufzeitkorrektur verwendet:

Mit Hilfe des ersten vom Meßempfänger gelieferten Impulses 15 vom Anfang der Meßbasis wird ein Vorwärts-/Rückwärtszähler 9 zum Aufwärtszählen gestartet. Dabei wird ein Taktgenerator 10 mit sehr hoher Frequenz $f_c$ benutzt, so daß beim Aufwärtszählen ca. 1.000 Impulse gezählt werden. Wenn die Spule das Ende der Meßbasis passiert (2. Nut oder Waffenrohrende), wird der Stop-Impuls für das Aufwärtszählen erzeugt. Jetzt wird von der Steuerlogik 11 auf Abwärtszählen umgeschaltet (18), und gleichzeitig wird über den elektronischen Schalter 14 eine heruntergeteilte Zählfrequenz $\gamma'$ dem Zähler 9 zugeführt. Die geteilte Frequenz $\gamma'$ zum Abwärtszählen wird von einem einstellbaren, z. B. programmierbaren, Teiler 12 erzeugt, dessen Teilerfaktor von der Flugzeit (und damit von der Schußentfernung) abhängt. Beim Zählerstand "0" wird der Zündimpuls geliefert.

Beispiel: Der Zähler habe beim Aufwärtszählen 1.000 Impulse gezählt.

Frequenz zum Abwärtszählen : $\gamma' = 1.000$ Hz daraus folgt: Der Zählerstand "0" wird nach Ablauf einer Sekunde erreicht.

Dieses Verfahren und Vorrichtung hat folgende Wirkungen und Vorteile:

Bei konstanter Frequenz des Taktgenerators während des Fluges des Geschosses hängt der Zündzeitpunkt linear von der Vorbeilaufzeit des Geschosses an der Meßbasis ab.

Bei geringer Geschoßgeschwindigkeit werden mehr Impulse gezählt, dadurch wird die Zeit beim Abwärtszählen bis zum Zählerstand "0" verlängert. Dies kompensiert genau die Verlängerung der Geschoßflugzeit bei kleinerer Anfangsgeschwindigkeit. Bei größerer Geschoßgeschwindigkeit wird in entsprechender Weise die Zeit bis zum Zündzeitpunkt verkürzt.

Die Einstellung, z. B. Programmierung des Frequenzteilers erfolgt vom Feuerleitrechner aus. Der Teilerfaktor N ergibt sich aus der mittleren Flugzeit des Geschosses bei der entsprechenden Schußentfernung (= Zündentfernung)

$$\frac{T_F(x)}{n} = \frac{1}{\gamma'(x)}$$

$$N(x) = \frac{f_c}{\gamma'(x)} = \frac{T_F(x)}{n} \cdot f_c$$

x = Schußentfernung
$T_F$ = Geschoßflugzeit (mittlere)
n = Zahl der Impulse im Zähler bei mittlerer $v_{vo}$
$\gamma'$ = Abwärts-Zählfrequenz
$f_c$ = ungeteilte Frequenz des Taktgenerators (Aufwärtszählfrequenz)
N = Teilerfaktor

Aufgrund der 1.000 Impulse, die beim Aufwärtszählen gezählt werden, kann eine Genauigkeit des Zündpunkts bezüglich der Schußentfernung von ca. 1-2 Promille erreicht werden.

Die Genauigkeit des Verfahrens wird im wesentlichen bestimmt durch die Zahl der Taktimpulse, die beim Aufwärtszählen gezählt werden. Je größer ihre Zahl n, umso größer ist die Genauigkeit des Zünders. Die Zahl n hängt von der Länge der Meßbasis D und der Größe der Frequenz $f_c$ ab.

An die Stabilität des Oszillators müssen nur relativ geringe und leicht erreichbare Anforderungen gestellt werden. Die Frequenz des Taktgenerators muß nur während der Flugzeit des Geschosses die Stabilitätsforderung

$$\frac{\Delta\ f_c}{f_c} < .\ 10^{-4}$$

erfüllen. Die Größe der Frequenz $f_c$ kann von Geschoß zu Geschoß in einem großen Rahmen (einige Prozent) schwanken, ohne daß sich dies auf die Genauigkeit des Zünders auswirkt.

Änderungen der Frequenz mit der Temperatur spielen ebenfalls eine untergeordnete Rolle, solange die Temperatur am Ort des Taktgenerators im Zünder während der Zeit vom Geschoßaustritt bis zur Zündung konstant bleibt.

Die Einstellung bzw. Programmierung des Frequenzteilers im Geschoß kann in unterschiedlicher Weise erfolgen:

1. Vor dem Schuß über ein durch den Verschluß und die Patronenhülse geführtes Kabel (bekanntes Verfahren);

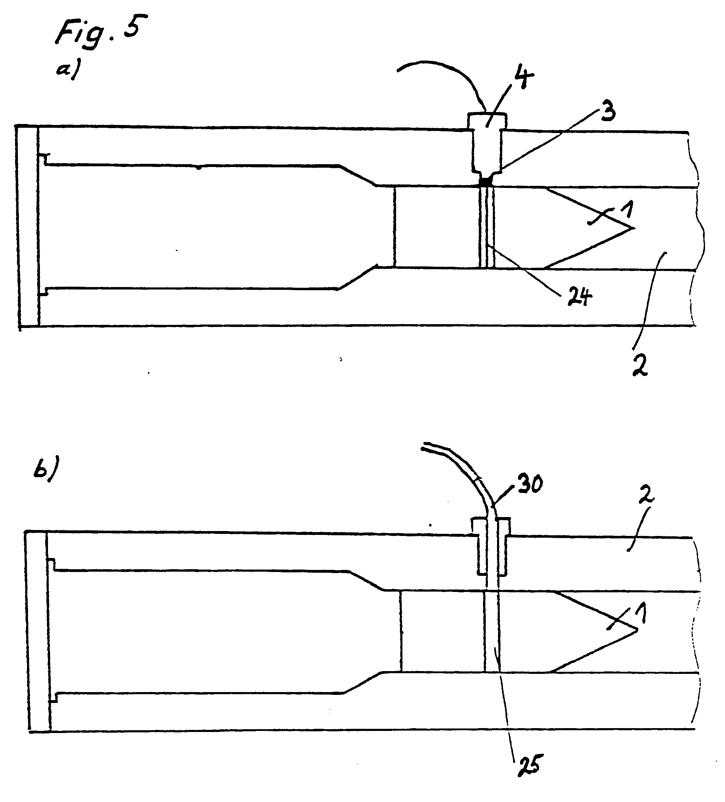

2. Vor dem Schuß induktiv mit Hochfrequenz direkt in das Geschoß, wobei eine $v_0$-Meßeinrichtung im Geschoß als Empfangssystem dienen kann (Fig. 5a);

3. Vor dem Schuß optisch über ein in einer Bohrung am Waffenrohr angebrachtes Glasfaserkabel als Lichtleiter 30, wobei das Geschoß über ein optisches Empfangssystem 25 verfügt (Fig. 5b);

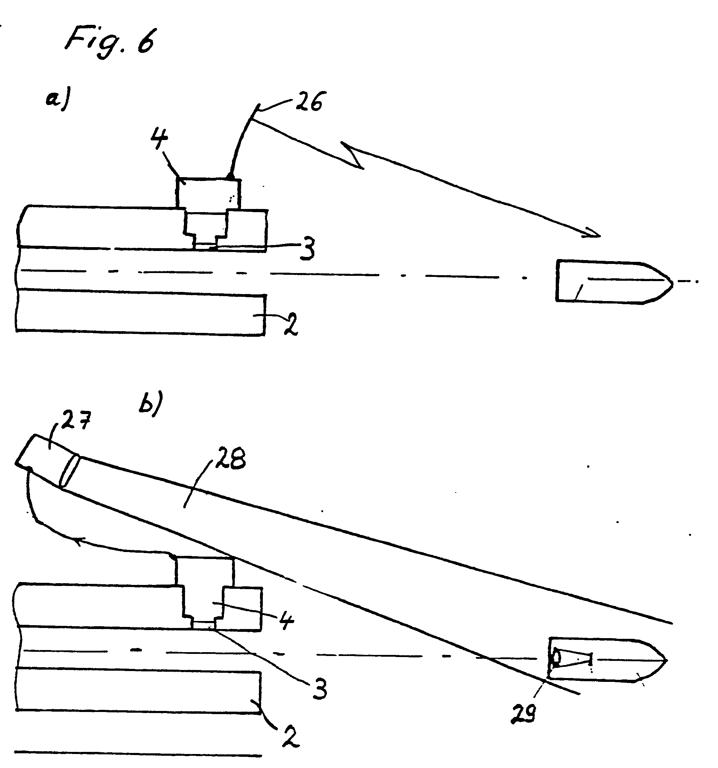

4. Nach der Schußabgabe auf der Flugbahn über Funk (Fig. 6 a);

5. Nach der Schußabgabe auf der Flugbahn über ein optronisches Sende- und Empfangssystem (Fig. 6b) mit Hilfe eines Impulses 27, dessen Strahl 28 von einer optischen Empfangseinrichtung 29 im Geschoß 1 aufgefangen wird.

**Patentansprüche**

1. Verfahren zur Einstellung der Laufzeit eines Geschoß-Zeitzünders, wonach die Mündungsgeschwindigkeit des Geschosses gemessen und die Laufzeit durch den Meßwert der Mündungsgeschwindigkeit korrigiert wird, dadurch gekennzeichnet, daß die Mündungsgeschwindigkeit des Geschosses mittels einer innerhalb des Geschosses angeordneten Meßeinrichtung mit Hilfe zweier ringförmiger Nuten (5) als Meßbasis ermittelt wird, die im Waffenrohrbereich ausgebildet sind.

2. Verfahren zur Einstellung der Laufzeit eines Geschoß-Zeitzünders, wonach die Mündungsgeschwindigkeit des Geschosses gemessen und die Laufzeit durch den Meßwert der Mündungsgeschwindigkeit korrigiert wird, dadurch gekennzeichnet, daß die Mündungsgeschwindigkeit des Geschosses mittels einer innerhalb des Geschosses angeordneten Meßeinrichtung mit Hilfe einer im Waffenrohrbereich ausgebildeten Nut (5) und dem Waffenrohrende als Meßbasis ermittelt wird.

3. Vorrichtung zur Durchführung des Verfahrens nach Anspruch 1 oder 2, gekennzeichnet durch einen im Geschoß angeordneten Oszillator (4) mit einer Spule (3), die sich an der Grenzfläche zwischen Waffenrohr und Geschoßhülle befindet, so daß seine Schwingfrequenz (f) durch die Meßbasis in Form einer im Waffenrohrbereich ausgebildeten ringförmigen Nut (5) bzw. ringförmiger Nuten (5) verstimmbar ist.

4. Vorrichtung nach Anspruch 3, dadurch gekennzeichnet, daß dem Oszillator ein Vorwärts-/Rückwärtszähler (9) und ein einstellbarer Frequenzteiler (12) zugeordnet ist.

**Claims**

1. Method of setting the operating time of a projectile time fuze by measuring the muzzle velocity of the projectile, and correcting the time setting on the basis of the muzzle velocity measured, characterized by determining the muzzle velocity of the projectile with the use of a measuring device located inside the projectile and having two annular grooves (5) located in the gun tube wall and used as a measuring basis.

2. Method of setting the operating time of a projectile time fuze by measuring the muzzle velocity of the projectile, and correcting the time setting on the basis of the muzzle velocity measured, characterized by determining the muzzle velocity of the projectile with the use of a measuring device located inside the projectile, having a groove (5) located in the gun tube wall and using the end of the gun tube as a measuring basis.

3. Apparatus for carrying out the method as claimed in claim 1 or in claim 2, characterized by an oscillator (4) located inside the projectile and equipped with a coil (3) placed at the interface between the gun tube and the envelope of the projectile so that the vibrational frequency (f) of the oscillator is detuned via the measuring basis which includes one annular groove (5) or annular grooves (5) located in the gun tube wall.

**0 118 122**

4. Apparatus as claimed in claim 3, characterized in that the oscillator is coupled with a bidirectional counter (9) and an adjustable frequency divider (12).

**Revendications**

1.Procédé pour le réglage du retard d'une fusée d'amorçage chronométrique suivant lequel la vitesse initiale du projectile est mesurée et le retard est corrigé en fonction du résultat de cette mesure, caractérisé par le fait que la vitesse initiale du projectile est déterminée au moyen d'un dispositif de mesure logé à bord du projectile et comportant comme base de mesure deux rainures annulaires (5) aménagées dans le tube de l'arme.

2. Procédé pour le réglage du retard d'une fusée d'amorçage chronométrique suivant lequel la vitesse initiale du projectile est mesurée et le retard est corrigé en fonction du résultat de cette mesure, caractérisé par le fait que la vitesse initiale du projectile est déterminée au moyen d'un dispositif de mesure logé à bord du projectile, comportant une rainure (5) aménagée dans le tube de l'arme, et utilisant l'extrémité du tube comme base de mesure.

3. Dispositif pour l'application du procédé conformément à la revendication 1 ou à la revendication 2, caractérisé par un oscillateur (4) placé à bord du projectile et équipé d'une bobine (3) logée à la surface de séparation entre le tube de l'arme et l'enveloppe du projectile de sorte que la fréquence d'oscillations (f) de cet oscillateur se trouve désaccordée par l'intermédiaire de la base de mesure constituée d'une rainure annulaire (5) ou de rainures annulaires (5) aménagée(s) dans le tube de l'arme.

4. Dispositif conforme à la revendication 3, caractérisé par le fait que l'oscillateur est relié à un compteur normal et à rebours (9) et à un diviseur de fréquence réglable (12).

Fig. 1

Fig. 2

# Fig. 3

# Fig. 4

| | |
|---|---|
| **Empfänger** 8 | |

Taktgenerator
$f_c = 1 - 50 \, MHz$
10

Vor-/Rück-Zähler
$n = 1 \ldots n_i$
9

Steuer-Logik
11

programmie-barer Teiler
$f_c \div N = \nu$
12

Abfrage
$n = 0$ ?
13

Fig. 5

a)

b)

Fig. 6

a)

b)